# EUROPÄISCHE PATENTSCHRIFT

(11) **EP 2 522 213 B1**
(45) Veröffentlichungstag und Bekanntmachung des Hinweises auf die Patenterteilung: **13.03.2019**
(21) Anmeldenummer: 12164631.9
(22) Anmeldetag: 18.04.2012
(51) Int. Cl.: A01G 23/091

(54) **Sammelvorrichtung für Mähwerk**
Collector for mower
Dispositif de collecte pour mécanisme de tonte

(30) Priorität: 12.05.2011 AT 6752011
(43) Veröffentlichungstag der Anmeldung: 14.11.2012
(73) Patentinhaber: Steininger, Werner, 4730 Waizenkirchen (AT)
(72) Erfinder: Steininger, Werner, 4730 Waizenkirchen (AT)
(74) Vertreter: KLIMENT & HENHAPEL

(56) Entgegenhaltungen:
- WO-A1-91/10544
- FR-A1- 2 553 969
- US-A- 4 434 827
- US-A- 4 592 398

## Beschreibung

Die Erfindung betrifft eine Sammelvorrichtung mit Mähwerk für Schnittgut zur Befestigung an Arbeitsmaschinen, gemäß dem Oberbegriff von Anspruch 1.

Die Sammelvorrichtung ist insbesondere für hochwüchsiges Schnittgut wie etwa Schilf, Elefantengras oder Mais, sowie baum- oder strauchartige Gewächse vorgesehen. Auch hoch gewachsene Wiesengräser, die in der Landwirtschaft als Heu gemäht werden, können gesammelt werden. Das abgetrennte Schnittgut wird dabei vorzugsweise in Bünden weiterverarbeitet, gelagert oder transportiert.

In herkömmlicher Weise wird das Schnittgut beim Erntevorgang am Halm in Bodennähe durchtrennt. Dazu ist ein Mähwerk als Schnittvorrichtung vorgesehen, wobei das Mähwerk über seine Breite bei einer Vorwärtsbewegung die Halme durchtrennt. Herkömmliche Mähwerke sind meist als aus dem Stand der Technik bekannte Doppelmessermähwerke ausgeführt. Das Mähwerk ist entweder als selbst fahrende Arbeitsmaschine ausgeführt oder wird an landwirtschaftlichen Arbeitsmaschinen angehängt. Da lange Halme mit dem Mähwerk möglichst in Bodennähe durchtrennt werden, kippt das Schnittgut nach dem Schnitt mit seiner gesamten Halmlänge auf den Boden. Durch unterschiedliche Wuchsrichtungen und die Kräfte die beim Schnitt auf den Halm wirken, wird das Schnittgut nach dem Durchtrennen in ungeordneter Richtung der Halme am Boden verteilt.

In herkömmlicher Weise wird das Schnittgut vom Boden mit zusätzlichen Sammel- bzw. Erntemaschinen aufgesammelt. Dies gestaltet sich vor allem bei hochwüchsigem Schnittgut aufgrund des, am Boden in viele Richtungen verteilten Schnittguts als schwierig, und macht aufwändige Sammel- bzw. Erntemaschinen notwendig, wobei der Einsatz dieser Maschinen zusätzlichen Kosten- und Arbeitsaufwand verursacht.

Nach der Aufnahme des Schnittguts vom Boden wird dieses auch meist unsortiert, also mit unterschiedlicher Halmausrichtung, etwa zu Ballen verpresst, um weiterverarbeitet oder abtransportiert werden zu können. Dabei knicken viele Halme um, und durch die ungeordnete Struktur wird mehr Lagervolumen bei geringerem Erntegewicht des Schnittguts benötigt. Eine Anordnung der Halme in dieselbe Richtung, und damit ein Zusammenfassen von Bünden mit Halm an Halm, ist nicht möglich.

Daher wurden Sammelvorrichtungen mit Mähwerk für Schnittgut zur Befestigung an Arbeitsmaschinen vorgeschlagen, wobei oberhalb des Mähwerks zwei Sammelarme vorgesehen sind, die einen Sammelbereich umfangsmäßig begrenzen und mit Schließdruck zueinander schwenkbar ausgeführt sind. Eine solche Sammelvorrichtung mit Mähwerk ist etwa aus der DE 2417737 bekannt. Das Schnittgut wird somit bei Schnittsetzung von den beiden Sammelarmen aufgenommen, sodass ein unkontrolliertes Fallen vermieden wird. Die schwenkbare Ausführung ermöglicht einerseits eine variable Einstellung des Sammelbereiches, andererseits aber auch die Entleerung des gesammelten Schnittgutes.

Eine weitere Sammelvorrichtung ist aus der FR 2 553 969 bekannt, bei der schwenkbare Sammelarme hinter zwei aufrecht angeordneten Mähtrommeln angeordnet sind, sowie aus der US 4,592,398. Vorrichtungen zum Fällen von Bäumen wurden in der US 4,434,827, und WO 91/10544 beschrieben.

Nachteilig bei bekannten Sammelvorrichtungen ist, dass zum Ablegen des Schnittguts die Sammelvorrichtung gemeinsam mit dem Mähwerk verschwenkt werden muss, was nicht nur energieaufwändig ist, sondern auch aufwändige bauliche Ausführungen verlangt, da zumeist die gesamte Antriebs- und Steuerungstechnik des Mähwerks verschwenkt werden muss. Des Weiteren ist die Bearbeitung geneigter Böden, etwa in Böschungsbereichen, nur schwer möglich, da zwar die Sammelvorrichtung mit dem Mähwerk entsprechend gekippt werden kann, um ein bodenparalleles Abmähen zu ermöglichen, das Schnittgut in diesem Fall aber nur mehr schlecht von der Sammelvorrichtung aufgenommen wird, da es auch auf geneigten Böden vertikal wächst.

Des Weiteren sind bekannte Sammel- bzw. Erntemaschinen der herkömmlichen Art meist schwer und schlecht manövrierbar, und damit nicht für alle Geländearten geeignet. Steile Böschungen oder schwer zugängliche Bereiche können von diesen Sammel- bzw. Erntemaschinen nicht befahren werden.

Es ist daher das Ziel der Erfindung diese Nachteile zu vermeiden und eine Sammelvorrichtung mit Mähwerk für Schnittgut so zu verbessern, dass der Abtransport des Schnittguts auch unter schwierigen Bodenverhältnissen, insbesondere bei geneigten Böden, einfach und kompakt erfolgen kann.

Diese Ziele werden durch die Merkmale des Anspruchs 1 erreicht. Anspruch 1 bezieht sich auf eine Sammelvorrichtung mit Mähwerk für Schnittgut zur Befestigung an Arbeitsmaschinen, wobei oberhalb des Mähwerks zwei Sammelarme vorgesehen sind, die einen Sammelbereich umfangsmäßig begrenzen und mit Schließdruck zueinander schwenkbar ausgeführt sind, wobei die Sammelarme an einer Hauptstütze angeordnet sind, die am Mähwerk befestigt und relativ zum Mähwerk kippbar ausgeführt ist. Erfindungsgemäß wird hierbei vorgeschlagen, dass die beiden Sammelarme unabhängig voneinander mit Schließdruck beaufschlagbar sind. Mit einer solchen Ausführung wird erreicht, dass die Sammelvorrichtung unabhängig vom Mähwerk verschwenkt werden kann. Auf diese Weise können etwa zum Abmähen einer Böschung die Sammelvorrichtung und das Mähwerk relativ zueinander so gekippt werden, dass die Hauptstütze der Sammelvorrichtung vertikal orientiert ist, und das Mähwerk bodenparallel. Somit kann auch bei geneigten Böden eine gute Aufnahme des Schnittgutes durch die Sammelvorrichtung erfolgen. Die Sammelarme sind mit Schließdruck versehen und beweglich ausgeführt, womit durch Verschwenken der Arme der Sammelbereich vergrößert bzw. verkleinert werden kann. Auch die Öffnung zwischen den beiden rotierenden Zuführelementen wird bei Verschwenken der Sammelarme vergrößert bzw. verkleinert, um die Sammelvorrichtung an unterschiedliche Menge an zugeführtem Schnittgut anzupassen. Insbesondere bei geneigten Böden kann es aber sehr vorteilhaft sein, die Sammelarme auch unabhängig voneinander öffnen oder schließen zu können. Wird etwa eine, in Fahrtrichtung gesehen links der Arbeitsmaschine ansteigende Böschung abgemäht, können die Sammelvorrichtung und das Mähwerk relativ zueinander so gekippt werden, dass die Hauptstütze der Sammelvorrichtung vertikal orientiert ist, und das Mähwerk bodenparallel. In dieser Lage kann es vorteilhaft sein, den linken, der Böschung zugewandten Sammelarm weiter zu öffnen, als den rechten, der Böschung abgewandten Sammelarm der Sammelvorrichtung, um eine optimale Aufnahme des Schnittguts zu ermöglichen.

Gemäß einer bevorzugten Ausführungsform wird vorgeschlagen, dass an den freien Enden der Sammelarme jeweils ein rotierendes Zuführelement für das Schnittgut angeordnet ist, um die Aufnahme des Schnittgutes während der Vorwärtsbewegung der Arbeitsmaschine zu verbessern. Dadurch werden auch höhere Vorwärtsgeschwindigkeiten ermöglicht. Die Halme werden dabei bei Vorwärtsbewegung des Mähwerks in Bodennähe vom Mähwerkmesser durchtrennt. Kurz vor dem Durchtrennen werden bei Vorwärtsbewegung die oberen Enden bzw. ein weiter oben liegender Abschnitt des Schnittguts von den rotierenden Zuführelementen erfasst, die am Ende der Sammelarme drehbar gelagert und angetrieben sind und mit ihrem Umfang in Vorwärtsrichtung geringfügig vor das Mähwerkmesser ragen. Die rotierenden Zuführelemente erfassen den Halm und führen eine Drehbewegung aus, die den Halm in Richtung des Sammelbereiches zwischen den beiden Sammelarmen führt. Dadurch ist der Halm bereits vor dem Schnitt gestützt, wodurch ein ungeordnetes Kippen des Halms verhindert wird. In einer bevorzugten Ausführungsform sind die rotierenden Zuführelemente an ihrer Oberfläche etwa mit Rippen parallel zu deren Rotationsachse versehen. Dadurch werden die Halme von den rotierenden Zuführelementen besser erfasst und mitgenommen.

In einer bevorzugten Ausführungsform ist vorgesehen, dass unterhalb der Sammelarme eine Stützplatte vorgesehen ist, die den Sammelbereich unterhalb der Sammelarme begrenzt. Die Stützplatte ist oberhalb des Mähwerks angeordnet. Wird der

Halm nun bei Vorwärtsbewegung vom Mähwerkmesser in Bodennähe durchtrennt, werden die unteren Enden des Schnittguts auf die Stützplatte geschoben. Das Schnittgut wird mit seinem Halm damit im Bereich zwischen den Sammelarmen und auf der Stützplatte stehend aufgenommen.

Da die Sammelvorrichtung relativ zum Mähwerk kippbar ausgeführt ist, kann die Sammelvorrichtung seitlich gekippt und das Schnittgut zum Abtransport abgelegt werden, sobald der Sammelbereich zwischen den Sammelarmen mit Schnittgut gefüllt ist. Durch Reduktion des Schließdrucks wird in weiterer Folge der bodenseitige Sammelarm schwerkraftbedingt so verschwenkt, dass das Schnittgut aus der Sammelvorrichtung fällt und abtransportiert werden kann. Wahlweise können die Sammelarme auch durch einen Öffnungsdruck beaufschlagt werden, um ein besser kontrolliertes Öffnen der Sammelarme zu ermöglichen.

Die Erfindung wird im Folgenden anhand eines Ausführungsbeispiels mithilfe der beiliegenden Zeichnungen näher erläutert. Es zeigen hierbei die
- Fig. 1a: eine Ansicht einer Ausführungsform einer erfindungsgemäßen Sammelvorrichtung für ein, an einer Arbeitsmaschine befestigbares Mähwerk von vorne gesehen,
- Fig. 1b: eine Ansicht einer erfindungsgemäßen Sammelvorrichtung gemäß Fig. 1a von der Seite gesehen,
- Fig. 1c: eine Ansicht einer erfindungsgemäßen Sammelvorrichtung gemäß Fig. 1a von oben gesehen,
- Fig. 1d: eine perspektivische Ansicht einer erfindungsgemäßen Sammelvorrichtung gemäß Fig. 1a,
- Fig. 1e: eine Ansicht einer erfindungsgemäßen Sammelvorrichtung gemäß Fig. 1a, die relativ zum Mähwerk verkippt ist, von vorne gesehen,
- Fig. 2a: eine Ansicht einer weiteren Ausführungsform einer an einer Arbeitsmaschine befestigbaren, erfindungsgemäßen Sammelvorrichtung mit, an der Sammelvorrichtung befestigtem Mähwerk von vorne gesehen,
- Fig. 2b: eine Ansicht einer erfindungsgemäßen Sammelvorrichtung gemäß Fig. 2a von der Seite gesehen,
- Fig. 2c: eine Ansicht einer erfindungsgemäßen Sammelvorrichtung gemäß Fig. 2a von oben gesehen,
- Fig. 2d: eine perspektivische Ansicht einer erfindungsgemäßen Sammelvorrichtung gemäß Fig. 2a, sowie
- Fig. 2e: eine Ansicht einer erfindungsgemäßen Sammelvorrichtung gemäß Fig. 2a, wobei das Mähwerk relativ zur Sammelvorrichtung verkippt ist, von vorne gesehen.

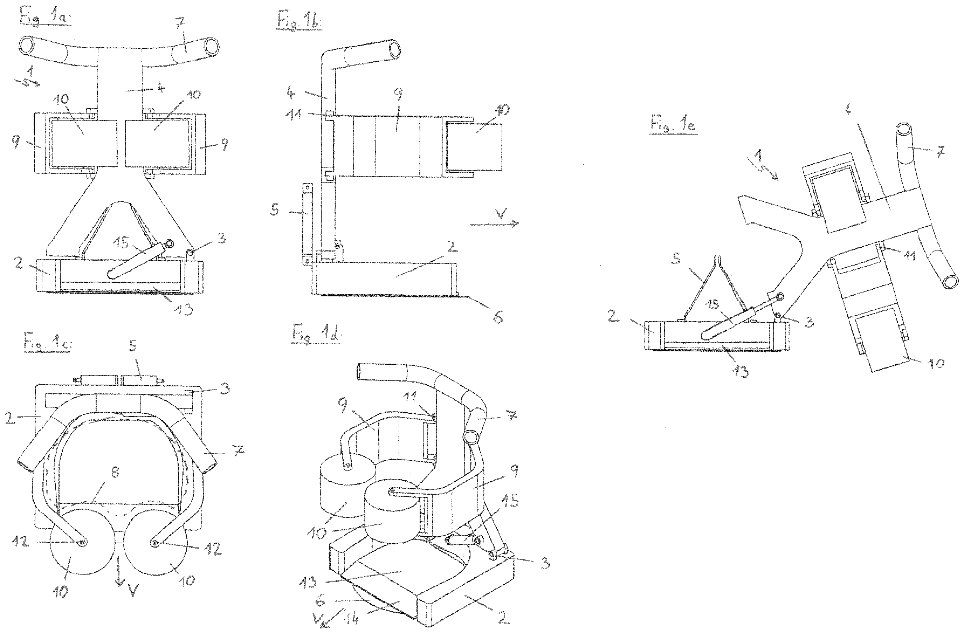

Die Fig. 1a, Fig. 1b, Fig. 1c, Fig. 1d und Fig. 1e zeigen eine Ausführungsform einer erfindungsgemäßen Sammelvorrichtung 1 mit Mähwerk 2. Die Sammelvorrichtung 1 ist oberhalb des Mähwerks 2 mit einem Verbindungsgelenk 3 befestigt. Um die Sammelvorrichtung 1 relativ zum Mähwerk 2 um das Verbindungsgelenk 3 zu verkippen, ist ein Kippmittel 15, etwa in Form eines Hydraulikzylinders, vorgesehen, der an der Sammelvorrichtung 1 und am Mähwerk 2 angebracht ist. Das Mähwerk 2 wird mit einer Anschlussvorrichtung 5 an der Arbeitsmaschine befestigt. Die Anschlussvorrichtung 5 befindet sich nach Fig. 1b in Vorwärtsrichtung V gesehen am hinteren Ende des Mähwerks 2. Am vorderen Ende des Mähwerks 2 befindet sich ein Mähwerkmesser 6. Die Ausführung einer Anschlussvorrichtung 5 an einer Arbeitsmaschine, sowie die Ausführung eines Mähwerkmessers 6, etwa als Doppelmessermähwerk oder rotierendes Schnittwerkzeug, sind aus dem Stand der Technik hinreichend bekannt und nicht Gegenstand der Erfindung.

Die erfindungsgemäße Sammelvorrichtung 1 weist eine Hauptstütze 4 auf. Am oberen Ende der Hauptstütze 4 ist eine in der horizontalen Ebene etwa halbkreisförmig gebogene Stützvorrichtung 7 vorgesehen. Am unteren Ende der Hauptstütze 4 befindet sich das Mähwerk 2. Die Stützvorrichtung 7 dient zum Handhaben der Sammelvorrichtung 1 bei Befestigung an das Mähwerk 2. Die Stützvorrichtung 7 ist um einen Sammelbereich 8 gebogen ausgeführt. Der Sammelbereich 8 wird gemäß Fig. 1c aus dem Bereich zwischen zwei Sammelarmen 9, sowie zwei rotierenden Zuführelementen 10 gebildet. Die Sammelarme 9 sind an der Hauptstütze 4 mit einer Schwenkverbindung 11 befestigt. Die Sammelarme 9 sind mit der Hauptstütze 4 in jener Weise verbunden, dass ein Schließdruck zwischen den Sammelarmen 9 beaufschlagbar ist. Dabei wird etwa eine Druckfeder oder ein steuerbarer Druckzylinder am einen Ende an einem Sammelarm 9 und am anderen Ende an der Hauptstütze 4 befestigt. Ausführungsvarianten, um die Sammelarme 9 mit Schließdruck zueinander zu beaufschlagen, sind dem Fachmann hinreichend bekannt. Am freien Ende der Sammelarme 9 sind Drehlager 12 vorgesehen, um das rotierende Zuführelement 10 aufzunehmen. Die rotierenden Zuführelemente 10 können durch, dem Fachmann bekannte Mittel in Rotationsbewegung versetzt werden.

Die rotierenden Zuführelemente 10 ragen gemäß der Ausführungsform in Fig. 1c in Vorwärtsrichtung V vor das Mähwerkmesser 6. Wird das Mähwerk 2 mit der daran befestigten Sammelvorrichtung 1 von der Arbeitsmaschine in Vorwärtsrichtung V bewegt, erfassen die rotierenden Zuführelemente 10 den Halm des Schnittguts und führen eine Drehbewegung aus, die den Halm in Richtung des Sammelbereichs 8 zwischen den beiden Sammelarmen 9 führt. Bei weiterer Bewegung des Mähwerks in Vorwärtsrichtung V wird vom Mähwerkmesser 6 der vom rotierenden Zuführelement 10 erfasste Halm in Bodennähe durchtrennt, und der abgeschnittene Halm wird auf eine Stützplatte 13 geschoben, die geringfügig oberhalb des Mähwerkmessers 6 angeordnet ist. Die Stützplatte 13 ist zur besseren Aufnahme des Halms mit einem abgeschrägten Abschnitt 14 versehen. Das Schnittgut wird dadurch mit, in dieselbe Richtung orientierten Halmen im Sammelbereich 8 oberhalb der Stützplatte 13 aufgenommen. Die Größe der Öffnung zwischen den beiden Zuführelementen 10 kann etwa automatisch so geregelt werden, dass die Öffnung bei mehr Schnittgutzufuhr vergrößert wird, aber dennoch ausreichender Schließdruck der Sammelarme 9 aufrecht erhalten wird. Auch die manuelle Steuerung der Sammelarme 9 etwa mittels Druckzylindern zwischen Hauptstütze 4 und Sammelarm 9 ist möglich, um die Größe der Öffnung kontrolliert anzupassen.

Dies ist notwendig, um die Sammelvorrichtung 1 an unterschiedliche Mengen der Schnittgutzufuhr bei unterschiedlichen Wuchsdichten oder unterschiedlicher Fahrgeschwindigkeit anzupassen und so sichergestellt wird, dass alle abgetrennten Halme aufgenommen werden können. Mit der Größe der Öffnung zwischen den beiden rotierenden Zuführelementen 10 wird auch der Sammelbereich 8 zwischen den Sammelarmen 9 vergrößert bzw. verkleinert. Ist der Sammelbereich 8 mit Schnittgut gefüllt, wird zum Entleeren die Sammelvorrichtung 1 gekippt.

Beim seitlichen Kippen der Sammelvorrichtung 1 nach Fig. 1e wird durch das Gewicht des Schnittguts dem Schließdruck des bodenseitigen Sammelarmes 9 in Richtung Boden entgegengewirkt und der betreffende Sammelarm 9 schwenkt nach unten. Sofern beide Sammelarme 9 unabhängig voneinander mit Schließdruck beaufschlagbar sind, kann auch der Schließdruck des bodenseitigen Sammelarmes 9 entsprechend reduziert werden. Das Schnittgut fällt damit als Bund aus der Sammelvorrichtung 1 und kann kompakt abtransportiert werden. Die Stützplatte 13 bleibt nach der Ausführungsform in Fig. 1a bis Fig. 1e beim seitlichen Kippen am Mähwerkmesser. Es kann jedoch auch vorgesehen sein, dass die Stützplatte 13 mit der Hauptstütze 4 verbunden ist, und damit beim Kippen gemeinsam mit der Hauptstütze 4 verkippt wird.

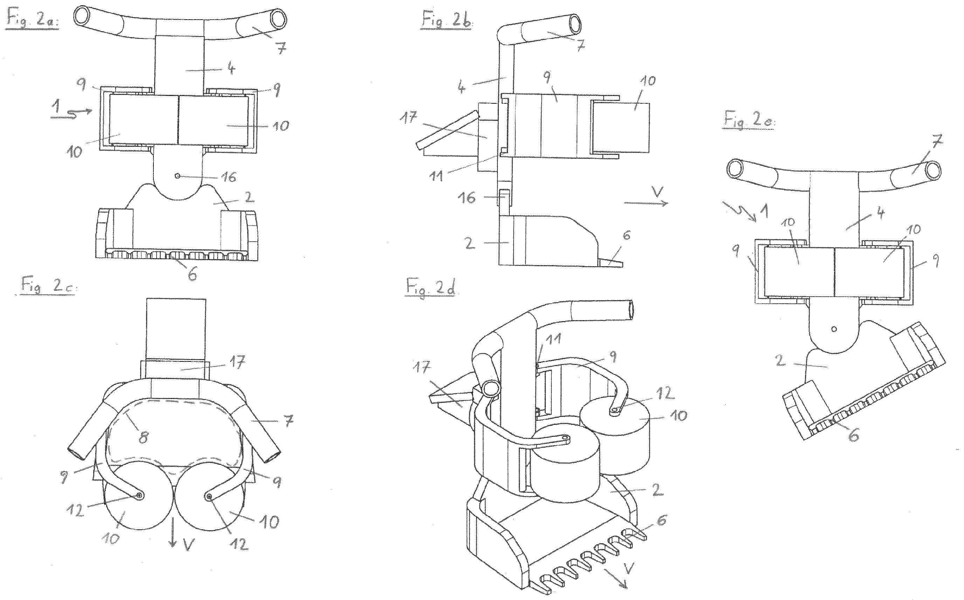

In Fig. 2a, Fig. 2b, Fig. 2c, Fig. 2d und Fig. 2e ist eine weitere Ausführungsform der Erfindung dargestellt. Die erfindungsgemäße Sammelvorrichtung 1 ist in dieser Ausführungsform an der Hauptstütze 4 mit einer verdrehbaren und relativ zur Arbeitsmaschine höhenverstellbaren Anschlussvorrichtung 17 an einer Arbeitsmaschine befestigt ausgeführt. Des Weiteren ist das Mähwerk 2 relativ zur Sammelvorrichtung 1 verschwenkbar befestigt, sodass das Mähwerk 2 relativ zur Sammelvorrichtung 1 gekippt werden kann. Die Fig. 2e zeigt das Verkippen des Mähwerks 2 relativ zur Sammelvorrichtung 1. Das Mähwerk 2 wird dabei um ein Kippgelenk 16 relativ zur Sammelvorrichtung 1 verkippt. Dabei wird das Mähwerkmesser 6 parallel zum Boden, etwa einer schrägen Böschung, geführt und dort das Schnittgut in Bodennähe durchtrennt. Die an der Böschung gewachsenen, vertikal nach oben ragenden Halme werden dabei von der Sammelvorrichtung 1 im Bereich zwischen den Sammelarmen 9 aufgenommen. Zur Entleerung der erfindungsgemäßen Sammelvorrichtung 1 in dieser Ausführungsform wird die Sammelvorrichtung 1 durch die verdrehbare Anschlussvorrichtung 17 relativ zur Arbeitsmaschine verdreht, wobei der bodenseitige Sammelarm 9 dabei in gleicher Weise nach unten schwenkt, wie in der Fig. 1e gezeigt ist, und das Schnittgut abgelegt wird.

Es ist unmittelbar ersichtlich, dass bei der erfindungsgemäßen Sammelvorrichtung 1 das Schnittgut direkt am Mähwerk 2 mit geordneter Halmausrichtung gesammelt wird, und der Abtransport des Schnittguts somit auch bei geneigten Böden einfach und kompakt erfolgen kann.

### Bezugszeichenliste:

- 1: Sammelvorrichtung
- 2: Mähwerk
- 3: Verbindungsgelenk
- 4: Hauptstütze
- 5: Anschlussvorrichtung
- 6: Mähwerkmesser
- 7: Stützvorrichtung
- 8: Sammelbereich
- 9: Sammelarm
- 10: rotierendes Zuführelement
- 11: Schwenkverbindung
- 12: Drehlager
- 13: Stützplatte
- 14: abgeschrägter Abschnitt
- 15: Kippmittel
- 16: Kippgelenk
- 17: verdrehbare Anschlussvorrichtung

- V: Vorwärtsrichtung

## Patentansprüche

1. Sammelvorrichtung (1) mit Mähwerk (2) für Schnittgut zur Befestigung an Arbeitsmaschinen, wobei oberhalb des Mähwerks (2) zwei Sammelarme (9) vorgesehen sind, die einen Sammelbereich (8) umfangsmäßig begrenzen und mit Schließdruck zueinander schwenkbar ausgeführt sind, wobei die Sammelarme (9) an einer Hauptstütze (4) angeordnet sind, die am Mähwerk (2) befestigt und relativ zum Mähwerk (4) kippbar ausgeführt ist, **dadurch gekennzeichnet, dass** die beiden Sammelarme (9) unabhängig voneinander mit Schließdruck beaufschlagbar sind.

2. Sammelvorrichtung (1) mit Mähwerk (2) nach Anspruch 1, **dadurch gekennzeichnet, dass** an den freien Enden der Sammelarme (9) jeweils ein rotierendes Zuführelement (10) für das Schnittgut angeordnet ist.

3. Sammelvorrichtung (1) mit Mähwerk (2) nach Anspruch 2, **dadurch gekennzeichnet, dass** die rotierenden Zuführelemente (10) an ihrer Oberfläche mit Rippen parallel zu deren Rotationsachse versehen sind.

4. Sammelvorrichtung (1) nach einem der Ansprüche 1 bis 3, **dadurch gekennzeichnet, dass** unterhalb der Sammelarme (9) eine Stützplatte (13) vorgesehen ist, die den Sammelbereich (8) unterhalb der Sammelarme (9) begrenzt.

## Claims

1. A collecting device (1) with mower (2) for cut material for fastening to machines, wherein two collecting arms (9) are provided above the mower (2) and delimit the periphery of a collecting region (8) and are pivotable relative to one another under a closing pressure, wherein the collecting arms (9) are arranged on a main support (4), which is fastened to the mower (2) and is tiltable relative to the mower (4), **characterised in that** the two collecting arms (9) can be acted on by closing pressure independently of one another.

2. The collecting device (1) with mower (2) according to claim 1, **characterised in that** a rotating feed element (10) for the cut material is arranged at the free ends of each of the collecting arms (9).

3. The collecting device (1) with mower (2) according to claim 2, **characterised in that** the rotating feed elements (10) are provided on their surface with ribs parallel to their axis of rotation.

4. The collecting device (1) according to any one of claims 1 to 3, **characterised in that** a support plate (13) is provided beneath the collecting arms (9) and delimits the collecting region (8) beneath the collecting arms (9).

## Revendications

1. Dispositif groupeur (1) avec mécanisme moissonneur (2) pour des matières à couper, à fixer sur des machines de travail, dans lequel sont prévus au-dessus du mécanisme moissonneur (2) deux bras groupeurs (9) qui délimitent la circonférence d'une zone de groupage (8) et peuvent pivoter l'un vers l'autre sous l'effet d'une pression de fermeture, les bras groupeurs (9) étant disposés sur un support principal (4) qui est fixé sur le mécanisme moissonneur (2) et construit de façon pivotante par rapport au mécanisme moissonneur (4), **caractérisé en ce que** les deux bras groupeurs (9) peuvent recevoir la pression de fermeture indépendamment l'un de l'autre.

2. Dispositif groupeur (1) avec mécanisme moissonneur (2) selon la revendication 1, **caractérisé en ce qu'**est disposé à l'extrémité libre de chacun des bras groupeurs (9) un élément de rapprochement rotatif (10) pour la matières à couper.

3. Dispositif groupeur (1) avec mécanisme moissonneur (2) selon la revendication 2, **caractérisé en ce que** les éléments de rapprochement rotatifs (10) sont munis sur leur surface de nervures parallèles à leur axe de rotation.

4. Dispositif groupeur (1) selon l'une des revendications 1 à 3, **caractérisé en ce qu'**est prévue en dessous des bras groupeurs (9) une plaque d'appui (13) qui délimite la zone de groupage (8) en dessous des bras groupeurs (9).
